# EUROPÄISCHE PATENTSCHRIFT

(11) **EP 1 193 114 B1**
(45) Veröffentlichungstag und Bekanntmachung des Hinweises auf die Patenterteilung: **04.05.2005**
(21) Anmeldenummer: 01122056.3
(22) Anmeldetag: 14.09.2001
(51) Int. Cl.: B60N 2/427, B60N 2/48

(54) **Kopfstütze**
Headrest
Appui-tête

(30) Priorität: 26.09.2000 DE 10047406
(43) Veröffentlichungstag der Anmeldung: 03.04.2002
(73) Patentinhaber: DaimlerChrysler AG, 70567 Stuttgart (DE)
(72) Erfinder: Baumann, Karl-Heinz, 71149 Bondorf (DE); Justen, Rainer, 71155 Altdorf (DE); Lasi, Ulrich, 71093 Weil im Schönbuch (DE)

(56) Entgegenhaltungen:
- DE-A- 3 900 495
- DE-A- 19 707 998
- DE-U- 29 907 245

## Beschreibung

Die Erfindung betrifft eine Kopfstütze für ein Kraftfahrzeug, die einen feststehenden Trägerteil und einen verfahrbaren, vorgespannten Teil aufweist, die über Hebel miteinander verbunden sind.

Aus der DE 197 07 998 A1 ist eine Kopfstütze bekannt, die einen feststehenden hinteren Teil und einen vorderen verfahrbaren Teil aufweist. Die beiden Teile sind über eine Vierlenkerschwenkhebelaufhängung miteinander verbunden, durch die der verfahrbare Teil von einer Normalposition in eine Schutzposition überführt werden kann. Die Schutzposition liegt im Vergleich zur Normalposition höher und weiter vorne. Als Antrieb für die Verlagerung des verfahrbaren Teils sind zwei unterschiedliche Kraftspeicher vorgesehen: eine Wickelfeder, die über einen Massehebel ausgelöst wird und ein pyrotechnischer Antrieb, der durch ein elektrisches Crashsignal aktiviert wird und über eine Bowdenzug an dem Hebelsystem angreift. Der Massehebel spricht dann an, wenn ein Aufprall unterhalb einer vorgegebenen Schwelle liegt. Der oberhalb der Schwelle liegende Bereich wird über das elektrische Crashsignal abgedeckt. Zur Abstützung des verfahrbaren Teils in der ausgefahrenen Position sind zusätzlich zu den Hebeln der Vierlenkerschwenkhebelaufhängung Stützhebel vorgesehen. Über an diesen Stützhebeln angreifende Zugseile kann der verfahrbare Teil von der Schutzposition zurück in die Normalposition bewegt werden.

Nachteilig an dieser bekannten Kopfstütze, ist der komplizierte Aufbau. Zwischen den beiden Teilen der Kopfstütze sind neben den vier Schwenkhebeln und den zwei Stützhebeln auch Angriffspunkte für einen Bowdenzug und Zugseile vorgesehen. Des weiteren ist in die Kopfstütze ein Masseelement integriert, für das ausreichend Platz zum Ausschwenken zur Verfügung sein muß und das relativ langsam auslöst, weil es zunächst eine gewisse Wegstrecke zurücklegen muß. Zudem sind zwei verschiedene Antriebseinheiten - Wickelfeder und pyrotechnischer Antrieb - vorgesehen, für die wiederum zwei verschiedene Auslöseelemente notwendig sind. Erfolgt die Auslösung durch einen pyrotechnischen Antrieb, so ist das Sicherheitssystem in der Kopfstütze nicht reversibel, das heißt es muß nach einem Auslösen erneuert werden.

Hinzu kommt, daß die Auslösung der bekannten Kopfstütze crashaktiv ist, daß heißt sie erfolgt erst dann, wenn ein Aufprall schon stattgefunden hat. Die dann verbleibende Zeit ist in den meisten Fällen zu kurz, um den verfahrbaren Teil der Kopfstütze in eine wirksame Schutzposition zu bewegen. Das bedeutet, daß es vorkommen kann, daß der verfahrbare Teil seine Schutzposition erst dann einnimmt, wenn der Kopf des Fahrzeuginsassen schon nach hinten geschleudert wurde. Wenn die Auslösung durch das Masseelement und der Antrieb durch die Wickelfeder erfolgt, wird der Zeitpunkt, zu dem die Kopfstütze die Schutzposition eingenommen hat, noch weiter verzögert, weil eine Wickelfeder die Bewegung des verfahrbaren Teils recht langsam auslöst.

Ein weiterer Nachteil der bekannten Kopfstütze ist darin zu sehen, daß der Bewegungsablauf aufgrund der Anordnung der Hebel und ihrer Schwenkpunkte in der Kopfstütze in einem Bogen von unten nach oben erfolgt. Bei diesem Bewegungsablauf besteht die Gefahr, daß der Kopf des Fahrzeuginsassen nach hinten über die Kopfstütze gezogen wird, wodurch die Verletzungsgefahr im Halswirbelbereich erheblich erhöht wird.

Vor diesem Hintergrund liegt der vorliegenden Erfindung die Aufgabe zugrunde, eine Kopfstütze der eingangs genannten Art zur Verfügung zu stellen, bei der eine Vorverlagerung des verfahrbaren Kopfstützenteils auf einfache Weise durchführbar ist.

Diese Aufgabe wird durch eine Kopfstütze für ein Kraftfahrzeug mit den Merkmalen des Patentanspruchs 1 gelöst. Danach weist die Kopfstütze einen feststehenden Trägerteil und einen verfahrbaren, vorgespannten Teil auf, die über mindestens einen oberen und einen unteren Hebel miteinander verbunden sind, wobei der verfahrbare Teil von einer Normalposition in eine Schutzposition und umgekehrt verfahren werden kann. Die erfindungsgemäße Lösung zeichnet sich dadurch aus, daß die unteren und oberen Hebel parallel zueinander angeordnet sind und daß zur Vorspannung des verfahrbaren Teils eine Feder vorgesehen ist, die mit ihrem einen Ende an dem feststehenden Trägerteil und mit ihrem anderen Ende direkt oder indirekt an einem der Hebel angreift.

Die Erfindung bringt den Vorteil mit sich, daß ihre Konstruktion einfach ist und sich die erfindungsgemäße Kopfstütze demnach einfach und damit kostengünstig herstellen läßt. Des weiteren bringt die parallele Anordnung mindestens eines oberen und eines unteren Hebels den Vorteil mit sich, daß der Verfahrweg des verfahrbaren Teils der Kopfstütze ebenfalls parallel ist. Daß bedeutet, daß die Kopfstütze über den Verfahrweg immer dieselbe Neigung beibehält. Dadurch wird gewährleistet, daß wenn der Kopf des Fahrzeuginsassen mit der Kopfstütze während des Verlagerns des einen Kopfstützenteils in Berührung kommt, der Kopf ohne Veränderung seiner Neigung nach vorne geschoben wird. Eine Neigungsveränderung hätte zur Folge, daß der Kopf entsprechend der Neigungsveränderung der Kopfstütze eine Neigungsveränderung erfahren würde, womit bei einer Aufprallsituation das Verletzungsrisiko erhöht würde.

Die Verwendung einer Feder zum Aufbringen einer Vorspannkraft in der Kopfstütze ist besonders günstig, weil man auf diese Weise den Kraftspeicher zum Antrieb der Bewegung in die Kopfstütze integrieren kann und aufwendige Verbindungen zwischen einem entfernt angeordneten Kraftspeicher und der Kopfstütze überflüssig werden. Zudem ist ein Auslösemechanismus, der eine Feder enthält im Gegensatz zu dem im Zusammenhang mit dem Stand der Technik beschriebenen pyrotechnischen Auslösemechanismus reversibel.

Vorteilhafte Ausführungsformen sind den Unteransprüchen zu entnehmen. Als Kraftspeicher kann beispielsweise eine Spiralfeder gewählt werden, die mit ihrem einen Ende an dem feststehenden Trägerteil, beispielsweise an einem Kopfstützenbügel, und mit ihrem anderen Ende an dem unteren Hebel angreift. Die Feder kann über einen Entriegelungshebel in ihrer gespannten Stellung, in der die Kopfstütze eine Normalposition einnimmt, arretiert werden. Dabei ist es möglich, daß der Entriegelungshebel im Normalzustand über eine Drehfeder gehalten wird. Dieses konkrete Feder-Hebelsystem ermöglicht eine reversible Funktion der Kopfstütze.

Gemäß einer weiteren Ausführungsform greift die Spiralfeder indirekt über einen Federhebel an einem der Hebel zwischen festem Trägerteil und verfahrbarem Teil an. Dieser Federhebel kann an der gleichen Stelle gelagert sein, wie der Hebel, an dem er angreift. Um eine Mitnahmeverbindung zwischen Federhebel und Hebel herzustellen, kann der Federhebel einen Mitnahmestift aufweisen, über den - sobald der Stift des Federhebels den Hebel berührt - eine Mitnahme gewährleistet ist. Zwischen dem Federhebel und dem Hebel, an dem er angreift, sind bevorzugt zwei Wellenscheiben angeordnet, durch die eine stufenlose Verstellbarkeit der Kopfstütze zu Komfortzwecken ermöglicht wird. Durch die Wellenscheiben wird nämlich eine definierte Schwergängikeit erzeugt, die zur Arretierung für die beschriebenen Zwecke ausreicht.

In besonders vorteilhafter Weise kann der Federhebel eine Verrasterung aufweisen, die beim Verlagern des verfahrbaren Teils der Kopfstütze mit einer Verrasterung eines Verrastungshebels zusammenwirkt. Auf diese Weise wird ein Zurückdrücken der Kopfstütze sowohl in Endstellung als auch in Zwischenstellungen verhindert.

Bevorzugt erfolgt die Auslösung der erfindungsgemäßen Kopfstütze crashsensiert. Wenn im Zusammenhang mit der Erfindung von Crashsensierung gesprochen wird, ist damit insbesondere eine Precrash-Sensierung und eine Kontaktsensierung gemeint. Die Precrash-Sensierung hat den Vorteil, daß Sicherheitsmaßnahmen im und am Fahrzeug vor einem eventuell eintretenden Aufprall eingeleitet werden können, so daß sie zum Zeitpunkt des Aufpralls schon eine Sicherheitsstellung eingenommen haben und damit einen optimalen Schutz für die Fahrzeuginsassen bieten.

Die Crashsensierung kann in vorteilhafter Weise mit einem Auslösegerät zusammenwirken, welches gemäß einer weiteren Ausführungsform in der Kopfstütze angeordnet und am feststehenden Trägerteil befestigt ist. Das Auslösegerät kann beispielsweise ein Kleinmagnet sein, welcher durch einen elektrischen Impuls der Crashsensierung ausgelöst wird. Ein solcher Kleinmagnet bringt den Vorteil mit sich, daß er innerhalb von wenigen Millisekunden, nachdem er ein elektrischen Impuls erhalten hat, auslöst, wodurch eine rechtzeitige Einnahme einer Sicherheitsposition gewährleistet wird.

Das Auslösegerät kann so angeordnet sein, daß es auf den Entriegelungshebel einwirkt, durch dessen Verschwenken der Kraftspeicher - die Feder - freigegeben wird. Aufgrund der Vorspannung der Feder löst diese nach ihrer Freigabe eine Bewegung aus, die den verfahrbaren Teil der Kopfstütze von der Normalposition in eine Schutzposition überführt.

Im folgenden wird die Erfindung anhand des in der Zeichnung dargestellten Ausführungsbeispiels des näheren erläutert. Es zeigen:
- Fig. 1:: einen Querschnitt durch eine erfindungsgemäße Kopfstütze;
- Fig. 2a bis 2c:: Querschnitte durch eine erfindungsgemäße Kopfstütze, die den Bewegungsablauf beim Überführen des verfahrbaren Teils der Kopfstütze in eine Schutzposition darstellen;
- Fig. 3a und 3b:: Querschnitte durch eine erfindungsgemäße Kopfstütze, die den Bewegungsablauf beim Zurückstellen des verfahrbaren Teils der Kopfstütze in eine Normalposition darstellen und
- Fig. 4a und 4b:: die Hebelanordnung der erfindungsgemäßen Kopfstütze zur Erläuterung der Komfortverstellung.

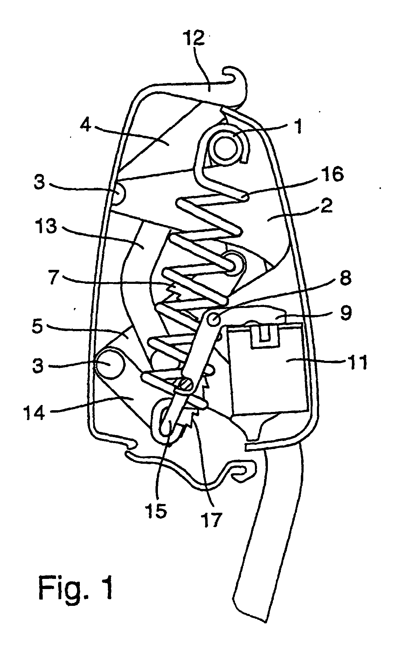

Gemäß Fig. 1 besteht die erfindungsgemäße Kopfstütze aus zwei Teilen, einem feststehenden hinteren Trägerteil 2 und einem verfahrbaren vorderen Teil, die über Hebel miteinander verbunden sind. An einem Kopfstützenbügel 1 ist der Trägerteil 2 angebracht. Das Trägerteil 2 ist feststehend und weist in dem Fahrzeuginnenraum nach hinten. An dem Trägerteil 2 sind auf der Vorderseite Lagerstellen 3 für obere und untere Hebel 4, 5 vorgesehen. In dem dargestellten Ausführungsbeispiel sind auf jeder Seite der Kopfstütze jeweils zwei Hebel 4, 5 - ein unterer und ein oberer - angeordnet, von denen in der Schnittdarstellung nur ein Paar dargestellt ist. Demnach weist der hintere Trägerteil 2 der dargestellten Ausführungsform vier Lagerstellen 3 auf. Diese Anordnung gewährleistet einen besonders stabilen Bewegungsablauf. Im folgenden wird nur eine Seite der Kopfstütze mit einem oberen Hebel 4 und einem unteren Hebel 5 beschrieben, da beiden Seiten identisch aufgebaut sind. Nur in den Bereichen, in denen eine Verbindung zwischen den beiden Seiten besteht, wird dies hervorgehoben.

Des weiteren ist an der Vorderseite des Trägerteils 2 eine - in Fig. 1 nicht sichtbare - Lagerstelle 6 für eine Verrastungshebel 7 vorgesehen. Die Funktion des Verrastungshebels 7 wird weiter unten näher erläutert. Das Trägerteil 2 weist zudem eine Lagerstelle 8 für einen ebenfalls noch näher zu beschreibenden Entriegelungshebel 9 auf.

Der untere und der obere Hebel 4, 5 verbinden das Trägerteil 2 mit dem beweglichen nach vorne zum Kopf des Fahrzeuginsassen ausgerichteten Teil 12 der Kopfstütze. Sie sind parallel zueinander angeordnet. Durch diese Anordnung wird gewährleistet, daß der Verfahrweg des Vorderteils 12 bei einer Auslösung parallel erfolgt. Damit ist gemeint, daß der Vorderteil 12 ohne Veränderung seiner Neigung nach vorne verfahren wird. Die Hebel 4, 5 sind jeweils über Verbindungshebel 13 miteinander verbunden, durch die eine Bewegung des einen Hebels auf den anderen Hebel weitergeleitet wird.

In der gleichen Lagerstelle 3, wie der untere Hebel 5, ist ein Federhebel 14 schwenkbar gelagert. Die Federhebel 14 auf beiden Seiten der Kopfstütze sind bei dem dargestellten Ausführungsbeispiel über eine Federstange 15 miteinander verbunden. Die Federstange 15 ist in der Fig. 1 geschnitten dargestellt. Die Federstange 15 dient unter anderem dazu, die Bewegungen der auf beiden Seiten der Kopfstütze angeordneten Hebelsysteme zu synchronisieren.

Der Federhebel 14 weist einen in Fig. 1 nicht dargestellten Mitnahmestift 21 auf, über den bei einer Bewegung des Federhebels 14 der untere Hebel 5 mit um die Lagerstelle 3 verschwenkt wird. An dem der Lagerung abgewandten Ende des Federhebels 14 ist dieser mit einer Spiralfeder 16 verbunden, die mit ihrem oberen Ende an dem feststehenden Kopfstützenbügel 1 befestigt ist. In der Normalposition der Kopfstütze ist die Feder 16 zwischen dem Kopfstützenbügel 1 und dem Federhebel 14 gespannt. Der am Trägerteil 2 in der Lagerstelle 8 gelagerte Entriegelungshebel 9 arretiert den Federhebel 14 und wird im Normalzustand von einer nicht dargestellten Drehfeder gehalten. Zum Arretieren des Federhebels 14 umgreift der Entriegelungshebel 9 die mit dem Federhebel 14 zusammenwirkende Federstange 15. Die Federstange 15 übernimmt also neben der Synchronisation der Bewegung der rechts und links der Kopfstütze angeordneten Federhebel 14 auch die Arretierung dieser in vorgespannter Position.

An dem Trägerteil 2 ist zudem ein Auslösegerät 11, zum Beispiel ein Kleinmagnet, angebracht. Das Auslösegerät 11 ist so angeordnet, daß es bei Betätigung auf den Entriegelungshebel 9 einwirkt und diesen so verschwenkt, daß er die Federstange 15 und mit dieser den Federhebel 14 freigibt.

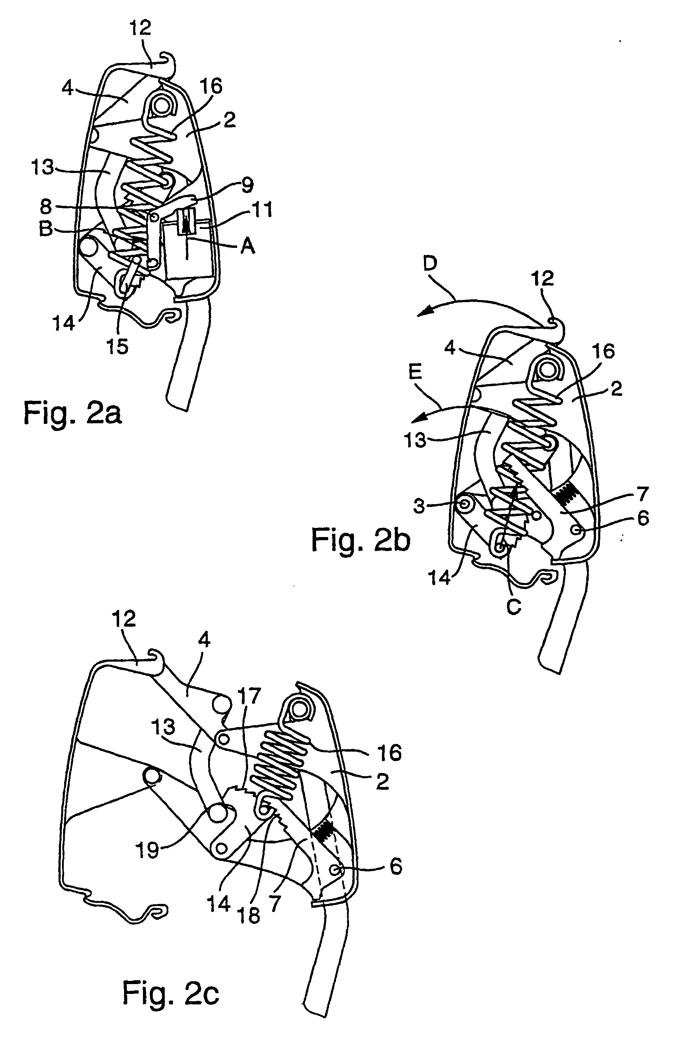

Im folgenden wird unter Bezugnahme auf die Fig. 2a bis 2c die Funktion der Crashauslösung näher erläutert. Durch einen elektrischen Impuls einer Sensierung wird das nur in Fig. 2a dargestellte Auslösegerät 11 betätigt. Als Sensierung ist bevorzugt eine Precrash-Sensierung vorgesehen, die sich dadurch auszeichnet, daß sie einen wahrscheinlich eintretenden Unfall registriert und daraufhin einen entsprechenden Impuls weitergibt. Das Auslösegerät 11 verschwenkt daraufhin den Entriegelungshebel 9 um seine Lagerstelle 8 entgegen die Federkraft der nicht dargestellten Drehfeder. In Fig. 2a ist diese Bewegung durch die Pfeile A und B angedeutet.

Der Entriegelungshebel 9, der als Kipphebel ausgeführt ist, gibt nun die Federstange 15 frei, die mit den beidseitig angeordneten, vorgespannten Federhebeln 14 verbunden ist. Die Feder 16 verschwenkt nun die Federhebel 14 um ihre Lagerstellen 3. Diese Bewegung ist durch den Pfeil C in der Fig. 2b angedeutet. Durch den Mitnahmestift an dem Federhebel 14 wird der untere Hebel 5 mit um die Lagerstelle 3 gedreht. Der Verbindungshebel 13 leitet die Bewegung an den oberen Hebel 4 weiter und ermöglicht somit ein Verfahren des vorderen Teils 12 der Kopfstütze. Die Kopfstütze bewegt sich auf einer bogenförmigen Bahn parallel, daß heißt ohne Neigungsveränderung, nach vorne (vgl. Pfeile D und E).

Der Federhebel 14 ist mit einer Verrasterung 17 versehen. Diese Verrasterung 17 rutscht beim Verfahren des vorderen Teils 12 der Kopfstütze an einer entsprechenden Verrasterung 18 an dem Verrastungshebel 7 entlang. Dadurch wird eine Zurückverlagern des ausgefahrenen Teils 12 der Kopfstütze sowohl in Endstellung als auch in Zwischenstellungen verhindert. Der Weg des verfahrbaren Teils 12 der Kopfstütze wird durch den Anschlag des Federhebels 14 an den Verbindungshebel 13 begrenzt. Diese Berührstelle zwischen Federhebel 14 und Verbindungshebel 13 ist mit dem Bezugszeichen 19 in der Fig. 2c gekennzeichnet.

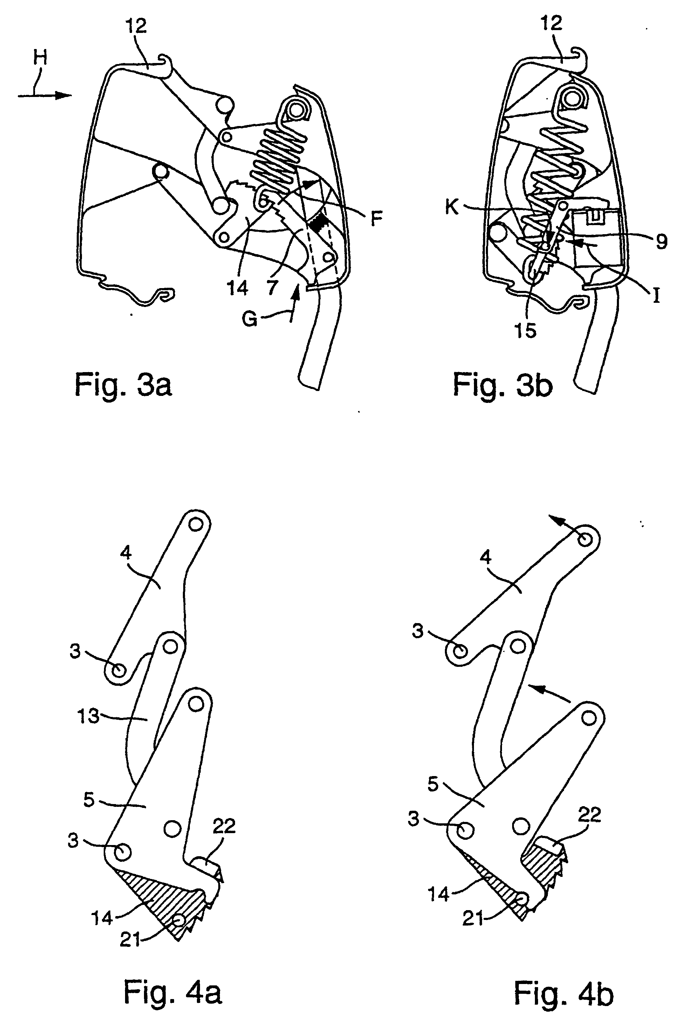

Wie in den Fig. 3a und 3b dargestellt, läßt sich der verfahrbare Teil 12 der Kopfstütze nach einer Crashauslösung durch manuelle Entriegelung in Richtung des Pfeils F des Verrastungshebels 7, zum Beispiel über einen Druckknopf (angedeutet durch den Pfeil G in Fig. 3a), und damit Lösen der Verrasterung zwischen dem Verrastungshebel 7 und dem Federhebel 14 zurückdrücken (Feil H in Fig. 3a). Der Entriegelungshebel 9, der über die nicht dargestellte Drehfeder vorgespannt ist, rastet danach wieder in die Federstange 15 ein (Pfeile I und K in Fig. 3b) und arretiert diese. Sobald dies erfolgt ist, hat der verfahrbare Teil 12 der Kopfstütze wieder seine Normalposition eingenommen. Dadurch wird eine reversible Funktion der Kopfstütze ermöglicht, die den Vorteil mit sich bringt, daß die Kopfstütze nach einem Auslösen nicht ausgewechselt werden muß.

Die soeben beschriebene Funktion der Crashauslösung ist unabhängig von der im folgenden im Zusammenhang mit den Fig. 4a und 4b beschriebenen Komforteinstellung der Kopfstütze. In Normalposition ist der Federhebel 14 durch den Entriegelungshebel 9 arretiert. Unterer und oberer Hebel 4, 5 sind beweglich an den Lagerstellen 3 gelagert, so daß grundsätzlich eine Verstellung des Vorderteils der Kopfstütze möglich ist. Eine stufenlose Verstellung wird in dem dargestellten Ausführungsbeispiel durch eine definierte Schwergängigkeit zum Beispiel mittels zweier nicht dargestellter Wellenscheiben zwischen dem unteren Hebel 5 und dem arretierten Federhebel 14 realisiert. Begrenzt wird der manuelle Verstellbereich durch die Begrenzung des Verdrehwinkels des unteren Hebels 5 über Mitnehmerstifte 21 und einen Anschlag 22 an dem arretierten Federhebel 14. In den Fig. 4a und 4b sind die beiden Extrempositionen dargestellt, in denen jeweils der Hebel 5 an dem Mitnehmerstift 21 oder an dem Anschlag 22 anliegt. Fig. 4a zeigt die oberste Stellung und Fig. 4b die unterste des verfahrbaren Teils 12. Zur Verdeutlichung sind die arretierten und damit feststehenden Federhebel 14 schraffiert dargestellt. Im Bereich der Komfortverstellung findet keine Verrasterung statt. Diese ist jedoch möglich.

Mit Hilfe der zuvor beschriebenen Anordnung ist es möglich, bei einer Kopfstütze der eingangs genannten Art eine crashsensierte Vorverlagerung des verfahrbaren Teils 12 der Kopfstütze reversibel durchzuführen und gleichzeitig eine Möglichkeit zur Komforteinstellung der Kopfstütze zur Verfügung zu stellen.

## Patentansprüche

1. Kopfstütze für ein Kraftfahrzeug, die einen feststehenden Trägerteil (2) und einen verfahrbaren, vorgespannten Teil aufweist, die über mindestens einen oberen und einen unteren Hebel (4, 5) miteinander verbunden sind, wobei der verfahrbare Teil von einer Normalposition in eine Schutzposition und umgekehrt verfahren werden kann
**dadurch gekennzeichnet,**
- **daß** die Hebel (4, 5) parallel zueinander angeordnet sind und
- **daß** zur Vorspannung des verfahrbaren Teils mindestens eine Feder (16) vorgesehen ist, die mit ihrem einen Ende an dem feststehenden Trägerteil und mit ihrem anderen Ende direkt oder indirekt an einem der beiden Hebel (4, 5) angreift.

2. Kopfstütze nach Anspruch 1,
**dadurch gekennzeichnet,**
die Feder (16) mit ihrem einen Ende an einen feststehenden Kopfstützenbügel (1) und mit ihrem anderen Ende an dem unteren Hebel (5) angreift.

3. Kopfstütze nach Anspruch 1 oder 2,
**dadurch gekennzeichnet,**
**daß** die Feder (16) eine Spiralfeder ist.

4. Kopfstütze nach einem der vorhergehenden Ansprüche,
**dadurch gekennzeichnet,**
**daß** die Feder (16) über einen Entriegelungshebel (9) in der Normalposition in gespannter Stellung arretiert ist.

5. Kopfstütze nach Anspruch 4,
**dadurch gekennzeichnet,**
**daß** der Entriegelungshebel (9) in der Normalposition über eine Drehfeder gehalten wird, die der Kraft der Feder (16) entgegen wirkt.

6. Kopfstütze nach einem der vorhergehenden Ansprüche,
**dadurch gekennzeichnet,daß**
die Feder (16) über einen Federhebel (14) an einem der Hebel (4, 5) angreift.

7. Kopfstütze nach Anspruch 6,
**dadurch gekennzeichnet,**
**daß** der Federhebel (14) an der gleichen Lagerstelle (3) gelagert ist, wie der Hebel (4, 5), an dem er angreift.

8. Kopfstütze nach Anspruch 6 oder 7,
**dadurch gekennzeichnet,**
**daß** der Federhebel (14) einen Mitnahmestift (21) aufweist, über den er den Hebel (4, 5), an dem er angreift, bei einer Schwenkbewegung um die Lagerstelle (3) mitnimmt.

9. Kopfstütze nach einem der Ansprüche 6 bis 8
**dadurch gekennzeichnet,**
**daß** zwischen dem Federhebel (14) und dem Hebel (4, 5), an dem er angreift, zwei Wellenscheiben angeordnet sind.

10. Kopfstütze nach einem der Ansprüche 6 bis 9,
**dadurch gekennzeichnet,**
**daß** der Federhebel (14) eine Verrasterung (17) aufweist, die beim Verlagern des verfahrbaren Teils der Kopfstütze mit einer Verrasterung (18) eines Verrastungshebels (7) zusammenwirkt.

11. Kopfstütze nach einem der vorhergehenden Ansprüche,
**dadurch gekennzeichnet,**
**daß** die Auslösung der Bewegung des verfahrbaren Teils (12) von der Normalposition in die Schutzposition crashsensiert erfolgt.

12. Kopfstütze nach einem der vorhergehenden Ansprüche,
**dadurch gekennzeichnet,**
**daß** an dem Trägerteil (2) ein Auslösegerät (11) befestigt ist.

13. Kopfstütze nach Anspruch 12,
**dadurch gekennzeichnet,**
**daß** das Auslösegerät (11) ein Kleinmagnet ist.

14. Kopfstütze nach Anspruch 12 oder 13,
**dadurch gekennzeichnet,**
**daß** das Auslösegerät (11) durch einen elektrischen Impuls eines Crashsensors ausgelöst wird.

15. Kopfstütze nach einem der Ansprüche 12 bis 14,
**dadurch gekennzeichnet,**
**daß** das Auslösegerät (11) auf den Entriegelungshebel (14) einwirkt.

16. Kopfstütze nach einem der vorhergehenden Ansprüche,
**dadurch gekennzeichnet,**
**daß** zwischen dem oberen und dem unteren Hebel (4, 5) ein Verbindungshebel (9) vorgesehen ist.

## Claims

1. Head restraint for a motor vehicle, which has a fixed support part (2) and a displaceable, prestressed part, which are connected to one another via at least one upper and one lower lever (4, 5), wherein the displaceable part can be displaced from a normal position to a protective position and vice versa, **characterised in that**
- the levers (4, 5) are arranged parallel to one another and
- in order to prestress the displaceable part, at least one spring (16) is provided which engages with one end on the fixed support part and with its other end directly or indirectly on one of the two levers (4, 5).

2. Head restraint according to claim 1, **characterised in that** the spring (16) engages with its one end on a fixed head restraint bracket (1) and with its other end on the lower lever (5).

3. Head restraint according to claim 1 or 2, **characterised in that** the spring (16) is a spiral spring.

4. Head restraint according to any one of the preceding claims, **characterised in that** the spring (16) is locked in a stressed position via a release lever (9) in the normal position.

5. Head restraint according to claim 4, **characterised in that** the release lever (9) is held in the normal position via a torsion spring which counteracts the force of the spring (16).

6. Head restraint according to any one of the preceding claims, **characterised in that** the spring (16) engages on one of the levers (4, 5) via a spring lever (14).

7. Head restraint according to claim 6, **characterised in that** the spring lever (14) is mounted at the same bearing point (3) as the lever (4, 5) on which it engages.

8. Head restraint according to claim 6 or 7, **characterised in that** the spring lever (14) has an entraining pin (21), via which it entrains the lever (4, 5), on which it engages, during a pivotal movement about the bearing point (3).

9. Head restraint according to any one of claims 6 to 8, **characterised in that** two shaft washers are arranged between the spring lever (14) and the lever (4, 5) on which it engages.

10. Head restraint according to any one of daims 6 to 9, **characterised in that** the spring lever (14) has a latching device (17), which, on displacement of the displaceable part of the head restraint, cooperates with a latching device (18) of a latching lever (7).

11. Head restraint according to any one of the preceding claims, **characterised in that** the movement of the displaceable part (12) from the normal position into the protective position is triggered when a crash is sensed.

12. Head restraint according to any one of the preceding claims, **characterised in that** a triggering apparatus (11) is fixed on the support part (2).

13. Head restraint according to claim 12, **characterised in that** the triggering apparatus (11) is a small magnet.

14. Head restraint according to claim 12 or 13, **characterised in that** the triggering apparatus (11) is triggered by an electric pulse of a crash sensor.

15. Head restraint according to any one of claims 12 to 14, **characterised in that** the triggering apparatus (11) acts on the release lever (14).

16. Head restraint according to any one of the preceding claims, **characterised in that** a connecting lever (9) is provided between the upper and the lower lever (4, 5).

## Revendications

1. Appui-tête pour un véhicule automobile qui comporte une partie de support fixe (2) et une partie précontrainte déplaçable qui sont reliées l'une à l'autre par au moins un levier supérieur et un levier inférieur (4, 5), la partie déplaçable pouvant être déplacée d'une position normale dans une position de protection et vice-versa
**caractérisé en ce que**
- les leviers (4, 5) sont placés parallèlement l'un à l'autre et
- pour la précontrainte de la partie déplaçable, il est prévu au moins un ressort (16) qui s'engage dans la partie de support fixe par l'une de ses extrémités et directement ou indirectement dans l'un des deux leviers (4, 5) par son autre extrémité.

2. Appui-tête selon la revendication 1,
**caractérisé en ce que**
le ressort (16) s'engage dans un étrier d'appui-tête fixe (1) par l'une de ses extrémités et dans le levier inférieur (5) par son autre extrémité.

3. Appui-tête selon la revendication 1 ou 2,
**caractérisé en ce que**
le ressort (16) est un ressort à spirale.

4. Appui-tête selon l'une quelconque des revendications précédentes,
**caractérisé en ce que**
le ressort (16) est bloqué en position tendue dans la position normale par un levier de déverrouillage (9).

5. Appui-tête selon la revendication 4,
**caractérisé en ce que**
le levier de déverrouillage (9) est maintenu dans la position normale par un ressort rotatif qui agit à l'opposé de la force du ressort (16).

6. Appui-tête selon l'une quelconque des revendications précédentes,
**caractérisé en ce que**
le ressort (16) s'engage dans l'un des leviers (4, 5) par l'intermédiaire d'un levier à ressort (14).

7. Appui-tête selon la revendication 6,
**caractérisé en ce que**
le levier à ressort (14) est logé sur le même point d'appui (3) que le levier (4, 5) dans lequel il s'engage.

8. Appui-tête selon la revendication 6 ou 7,
**caractérisé en ce que**
le levier à ressort (14) comporte une goupille d'entraînement (21) à l'aide de laquelle il entraîne le levier (4, 5), dans lequel il s'engage, par un mouvement pivotant autour du point d'appui (3).

9. Appui-tête selon l'une quelconque des revendications 6 à 8,
**caractérisé en ce que**
deux rondelles ondulées sont placées entre le levier à ressort (14) et le levier (4, 5) dans lequel il s'engage.

10. Appui-tête selon l'une quelconque des revendications 6 à 9,
**caractérisé en ce que**
le levier à ressort (14) comporte un dispositif à crans (17) qui coopère avec un dispositif à crans (18) d'un levier à crans (7) lorsque la partie déplaçable de l'appui-tête est déplacée.

11. Appui-tête selon l'une quelconque des revendications précédentes,
**caractérisé en ce que**
le déclenchement du mouvement de la partie déplaçable (12) de la position normale dans la position de protection se fait par détection de crash.

12. Appui-tête selon l'une quelconque des revendications précédentes,
**caractérisé en ce que**
un dispositif de déclenchement (11) est fixé sur la partie de support (2).

13. Appui-tête selon la revendication 12,
**caractérisé en ce que**
le dispositif de déclenchement (11) est un petit aimant.

14. Appui-tête selon la revendication 12 ou 13,
**caractérisé en ce que**
le dispositif de déclenchement (11) est déclenché par une impulsion électrique d'un détecteur de crash.

15. Appui-tête selon l'une quelconque des revendications 12 à 14,
**caractérisé en ce que**
le dispositif de déclenchement (11) agit sur le levier de déverrouillage (14).

16. Appui-tête selon l'une quelconque des revendications précédentes,
**caractérisé en ce que**
un levier de liaison (9) est prévu entre le levier supérieur et le levier inférieur (4, 5).
